# EUROPEAN PATENT SPECIFICATION

(11) **EP 1 675 326 B1**
(45) Date of publication and mention of the grant of the patent: **09.12.2009**
(21) Application number: 05301074.0
(22) Date of filing: 19.12.2005
(51) Int. Cl.: H04L 12/56

(54) **Method and apparatus for configuring a communication path**
Verfahren und Vorrichtung zur Konfiguration eines Kommunikationspfades
Procédé et dispositif pour configurer un trajet de communication

(30) Priority: 23.12.2004 US 20503
(43) Date of publication of application: 28.06.2006
(73) Proprietor: Alcatel Lucent, 75008 Paris (FR)
(72) Inventor: Lee, Cheng-Yin, K2B 6A5, Ottawa (CA)
(74) Representative: Nicolle, Olivier

(56) References cited:
- EP-A- 1 465 376
- PELSSER C ET AL: "Extending rsvp-te to support inter-as lsps" HIGH PERFORMANCE SWITCHING AND ROUTING, 2003, HPSR. WORKSHOP ON JUNE 24-27, 2003, PISCATAWAY, NJ, USA,IEEE, 24 June 2003 (2003-06-24), pages 79-84, XP010654648 ISBN: 0-7803-7710-9
- DE CNODDER C PELSSER S: "Protection for inter-AS MPLS tunnels" IETF STANDARD-WORKING-DRAFT, INTERNET ENGINEERING TASK FORCE, IETF, CH, July 2004 (2004-07), XP015012360 ISSN: 0000-0004
- CY LEE A FARREL S DE CNODDER: "Exclude Routes - Extension to RSVP-TE" IETF STANDARD-WORKING-DRAFT, INTERNET ENGINEERING TASK FORCE, IETF, CH, vol. ccamp, no. 2, July 2004 (2004-07), XP015016659 ISSN: 0000-0004
- AWDUCHE ET AL: "RSVP-TE: Extensions to RSVP for LSP Tunnels" IETF STANDARD, INTERNET ENGINEERING TASK FORCE, IETF, CH, December 2001 (2001-12), XP015008988 ISSN: 0000-0003

## Description

### FIELD OF THE INVENTION

The present invention relates to methods and devices for configuring a communication path, and in particular but not limited to methods and devices for configuring a communication path which extends through different network domains.

### BACKGROUND OF THE INVENTION

In provisioning a communication path between two nodes on a network, a primary path is set up through the network to carry traffic between the two nodes under normal conditions. In addition, it is often desirable to establish a second path between the two nodes to carry traffic, for example, if the primary path fails or additional bandwidth is required. For this reason, the secondary path should try to avoid using the same resources (e.g. links and nodes) of the primary path so that the two paths are as diverse as possible. Although a network may provide a number of different resources that can be used to establish the secondary path, some resources may be exposed to the same or similar risk of failure as resources on the primary path, due, for example, to their geographical proximity. For example, different optical fibres connected to two different nodes may be bundled into the same pipe over part of their length and are therefore exposed to the same risk of failure if the pipe is severed. Links that share a common risk may be identified and assigned a group identity. For example, the RSVP-TE (Resource Reservation Protocol-Traffic Engineering) specification provides a "Shared Risk Link Group" (SRLG) identifier for use when setting up a protection path to avoid using resources exposed to the same risk (and therefore having the same SRLG identifiers) as the primary path.

Establishing a communication path between two nodes may require the path to traverse different network domains (or regions), e.g. networks that are managed under different administrations, (and which may also be referred to as Automated Systems (AS)) and where the SRLG IDs are not used consistently between the domains so that a group identifier in one domain has a different or no meaning in another domain. This may cause problems when setting up an interdomain communication path in that the use of SRLGs applicable to one domain in the set-up signalling cannot be correctly interpreted for the purpose of protection path set-up in another domain.

Another problem that may arise in set-up signalling is the amount of information that needs to be included in the signal specifying which resources to include or exclude when setting up the path. Furthermore, where the path traverses a number of different network domains, the set-up signalling includes details of resources in the different domains to include or exclude and it may be undesirable to pass information about the resources in one domain to another domain.

EP-A-1465376 discloses a method of communication path set-up signalling which enables specific network resources to be excluded from a communication path. The method provides an extension to RSVP-TE in the form of a new object referred to as "an exclude route object" which allows, in a path set-up request, the specification of a set of abstract nodes and resources to be explicitly excluded from the path. This mechanism addresses the problem in systems in which the initial set-up signalling uses loose routes or partially specified abstract nodes which are resolved within the network as hops of the explicit route, and which prior to this mechanism did not allow exclusions to be communicated to the nodes that evaluate the routes. The mechanism provides the ability to set-up diverse paths as a result of specifying network resources to exclude in a path set-up. The mechanism also provides the ability to specify in an explicit route object (ERO) an SRLG to be excluded. The exclude route object specifies each abstract node to be excluded from the path, where an abstract node may be a single node, group of nodes or an autonomous system. Each abstract node or resource is identified by a sub-object which specifies "resource type", an action to be taken with respect to the resource and a "resource field" to identify the resource. When a node receives and is present in a path message, it must check if it is on the exclude route list or part of any SRLG. In one example, a diverse path is set up across three autonomous systems by specifying in the path set-up signal specific nodes of each autonomous system, including area border routers.

Pelsser C et al.: "Extending rsvp-te to support inter-as Isps" HIGH PERFORMANCE SWITCHING AND ROUTING, 2003, HPSR. WORKSHOP ON JUNE 24-27, 2003, PISCATAWAY, NJ, USA, IEEE, 24 June 2003 (2003-06-24), pages 79-84, XP010654648 ISBN: 0-7803-7710-9 discloses a method of routing an LSP (label switched path) between autonomous systems (ASs) by using an explicit route object (ERO) in the path set-up signalling. The ingress border node of each autonomous system specifies in the ERO only the nodes of the AS in which the path is to be set-up and the egress border node of that AS. Each node within the AS removes itself from the ERO list as the path is set up through the AS. The egress border node of the AS specifies in the ERO the ingress border node of the next AS which in turn computes the next path section through the next AS. The ERO also contains the IP address of the destination node. In this way, the ERO only contains information about the forward path within any given autonomous system so that information about resources in previously traversed autonomous systems is not passed between ASs, to maintain the information confidential. Similarly, a mechanism is provided for recording information about the resources on a communication path between different ASs in which the record route object (RRO) is modified only to identify the ingress and egress border nodes of a particular AS, with the intermediate nodes of that AS being replaced by the AS number. Again, this mechanism prevents the identity of intermediate nodes within an AS being passed to another AS. A method of setting up a diverse path to protect an egress border node is provided in which a node upstream of the node to be protected has information on an alternative egress border node, obtained through manual configuration or border gateway protocol (BGP,) and sets up two LSPs to protect both the link from the upstream node to the egress border node and the egress border node itself.

### SUMMARY OF THE INVENTION

According to one aspect of the present invention there is provided a method of forming a signal for configuring a communication path between first and second network elements of a communication network, comprising: selecting at least one group identifier used to identify a plurality of network resources in a predetermined network domain and between said first and second network elements; and forming a path set-up signal for causing one or more network elements to configure a communication path characterized by specifying in said signal said at least one group identifier, a network domain identifier which indicates that said at least one group identifier is associated with said network domain, and an indication that said network resources in said domain having said at least one group identifier should be one of included in and excluded from said communication path.

Advantageously, in this arrangement, the set-up signalling includes, in addition to an identifier for identifying one or more network resources, an area or domain identifier identifying the area with which the identifier is associated. This allows nodes in different areas to determine whether or not the identifier is applicable to that node.

The identifier comprises a group identifier used to identify a plurality of resources in a predetermined network domain. For example, the group identifier may be used to identify a group of resources in a predetermined network domain in which the resources all have a common property. In one embodiment, the group identifier may comprise a shared risk link (SRLG) identifier. The resources may include, for example a node (network element), communication path section, port, link or other resource.

In embodiments of the present invention, the set-up signal may include a plurality of group identifiers that pertain to different areas, together with an indication of the area with which each group identifier is associated.

According to another aspect of the present invention, there is provided a method of determining a communication path comprising the steps of: receiving at a network element a communication path set-up signal containing at least one group identifier used to identify a plurality of network resources, an indication that said at least one group identifier is associated with a predetermined network domain and a further indication that said network resources should be one of included in and excluded from a communication path; detecting the indication of said network domain in said signal; based on the detected network domain, determining whether or not to include said at least one group identifier and said further indication in a decision on determining said communication path; and determining said communication path.

The identifier comprises a group identifier used to identify a plurality of network resources, and the resources of the group may or may not all have a common property.

Some embodiments further include determining a communication path section comprising: receiving at a network element a signal containing at least one identifier used to identify one or more network resources and an indication that the at least one identifier is associated with a predetermined network domain; and determining at the network element a communication path section based on whether or not the network element resides in the network domain indicated in the signal.

According to another aspect of the present invention, there is provided a network element comprising signal forming means for forming, for transmission on a network, a path set-up signal for configuring a communication path between first and second network elements, characterized in that said signal forming means is adapted to include in said signal at least one group identifier used to identify a plurality of network resources in a predetermined network domain and between said first and second network elements, a network domain identifier indicating that said at least one group identifier is associated with said network domain, and an indication that said network resources in said domain having said at least one group identifier should be one of included in and excluded from said communication path.

In one embodiment, the group identifier may comprise an identifier for identifying any resources in the predetermined network domain. The resources in the group identified by the group identifier may or may not have a common property.

According to another aspect of the present invention, there is provided a network element comprising receiving means for receiving a communication path set-up signal containing at least one group identifier used to identify a plurality of network resources, an indication that said at least one group identifier is associated with a predetermined network domain and a further indication that said network resources should be one of included in and excluded from a communication path, detecting means for detecting the indication of said network domain in said signal, first determining means for determining, based on the detected network domain, whether or not to include said at least one group identifier and said further indication in a decision on configuring a communication path; and second determining means for determining said communication path.

In one embodiment, the second determining means is adapted to exclude from consideration in determining the communication path, network resources having any group identifiers associated with a detected network domain in the signal if the detected network domain is different from that in which the network element resides.

In some embodiments, the network element comprises determining means for determining a communication path section based on whether or not the network element resides in the network domain indicated in said signal.

In some embodiments, the method of forming a signal comprises receiving a resource group identifier used to identify a group of resources on a pre-configured network path, and forming a signal containing the resource group identifier.

Advantageously, the use of a resource group identifier to identify a group of resources on a pre-configured network path obviates the need to explicitly identify each individual resource in the signal, and therefore can take the place of individual identifiers for each resource and reduce the amount of space required in the signal to identify the resources of the group. Furthermore, the resource group identifier may constitute a pseudonym, alias or label to effectively mask or hide the identity of the resources in the group from third parties, where it is required or desirable to do so. For example, the resource group identifier can be used to prevent information about specific resources in one domain (or automated system) being revealed to another domain, and this may be particularly useful in path set-up signals used to set-up communication paths which cross from one domain to another.

The resource group identifier may be used to identify any number of resources on a pre-configured network path and the resources may be limited to those belonging to a predetermined network domain and may comprise all of the resources of that network domain on the pre-configured network path or a subgroup of resources within that network domain.

In one embodiment, the resource group identifier may be used to identify those resources of a label switched path (LSP) in which the resources may or may not be limited to a predetermined network domain.

In one embodiment, the method further comprises the step of including in the signal, an instruction associated with the resource group identifier for causing a network element to process the resource group identifier based on the instruction. For example, the instruction may comprise an instruction to either include or exclude a resource group indicated by the group identifier in configuring a communication path, and the signal may comprise a set-up signal for configuring a communication path through a network.

In some embodiments, the method of forming a signal comprises the steps of: receiving a resource group identifier used to identify resources on the network, identifying from a record a resource identifier of the resources associated with the group identifier, and forming a signal containing a resource identifier of at least one resource identified from the record.

In some embodiments, the network element comprises receiving means for receiving a signal containing a resource group identifier used to identify a group of resources on a pre-configured network path, and signal forming means arranged to form a signal for transmission on the network, the signal containing the resource group identifier.

In some embodiments, the network element comprises receiving means for receiving a signal containing a resource group identifier used to identify resources on a network, storage means containing a record of the resource group identifier and associated with the resource group identifier a respective resource identifier identifying each of the resources in the group, comparing means for comparing the resource group identifier in the signal to the resource group identifier in the record, and signal forming means responsive to a result of the comparison for forming a signal for configuring a communication path.

In one embodiment, the signal forming means is adapted to include in the signal, an instruction associated with an identifier for causing another network element to make a decision based on the instruction. The instruction may comprise an instruction to include or an instruction to exclude a resource when configuring the communication path.

The network element may reside in a predetermined network domain, and the receiving means may be adapted to receive the signal containing the resource identifier from another network domain.

In one embodiment, the network element resides in a predetermined network domain and is adapted to transmit the signal for configuring the communication path to another network element in the same predetermined network domain.

The network element may be adapted to transmit to at least one other network element another signal comprising the resource group identifier and a resource identifier identifying at least one resource associated with the group identifier. The network element and the other network element may both be in the same network domain.

In some embodiments, a network element in a predetermined network domain comprises storage means for storing a resource group identifier and a resource identifier identifying at least one resource in the network domain associated with the resource group identifier, the number of resources associated with the resource group identifier being fewer than the resources in the network domain, and signal forming means for forming a signal for transmission on a network, the signal containing the resource group identifier and resource identifier identifying at least one resource associated with the resource group identifier, and transmitting means for transmitting the signal to at least one other network element.

The network element may further comprise selection means for selecting at least one other network element based on which other network elements are located in the same network domain as the network element.

In one embodiment, the group identified by the resource group identifier includes fewer than all of the nodes in the network domain. The group identified by the resource group identifier may consist essentially of resources in a predetermined path in the network domain.

In one embodiment, the one or more resources associated with the resource group identifier each comprises a resource to be one of included in and excluded from a communication path.

The resource group identifier may be associated with one or more identifiers for identifying a common property of resources on the network.

Some embodiments include a data structure comprising: a resource group identifier identifying a group of resources on a network, and associated with said resource group identifier at least one resource identifier for identifying a resource in said group.

### BRIEF DESCRIPTION OF THE DRAWINGS

Examples of embodiments of the present invention will now be described with reference to the drawings, in which:
Fig. 1 shows an example of a communication network which traverses different domains;
Fig. 2 shows a schematic diagram of a network element (or node) according to an embodiment of the present invention;
Fig. 3 shows a schematic diagram of a network element according to another embodiment of the present invention;
Fig. 4 shows a schematic diagram of part of a set-up signal according to an embodiment of the present invention;
Fig. 5 shows an example of another communication network which traverses different domains;
Fig. 6A shows a network element according to an embodiment of the present invention, and
Fig. 6B shows a network element according to another embodiment of the present invention.

### DESCRIPTION OF EMBODIMENTS

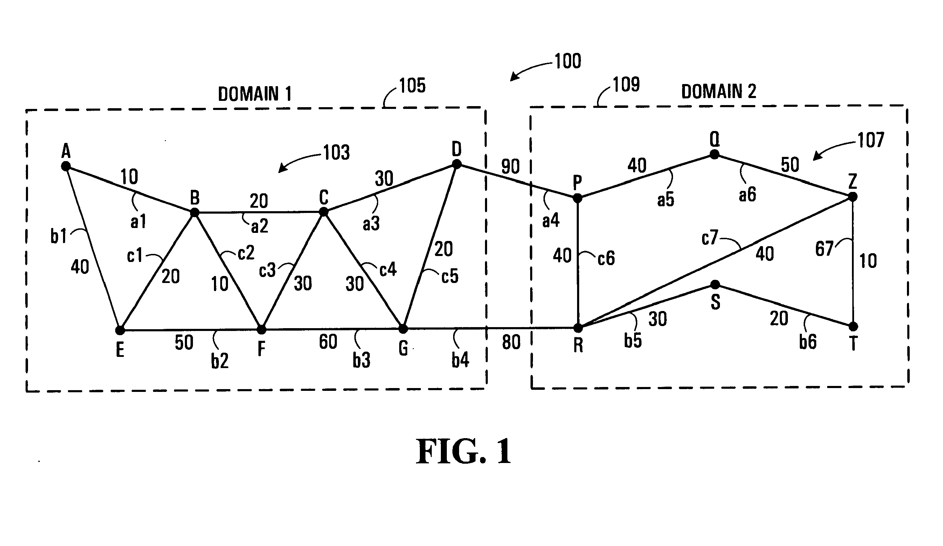

Referring to Fig. 1, a communication network generally shown at 100, includes a first network 103 in a first domain 105 and a second network 107 in a second domain 109, and each network includes a number of nodes and links between the nodes. A primary communication path, for example, a label switched path (LSP), is configured from node A in the first domain 105 to node Z in the second domain 109, for example using "Shortest Path First" or another set-up protocol. In this example, the primary path includes nodes A, B, C, D, P, Q and Z and links a1, a2, a3, a4, a5 and a6. Each link on the primary path is assigned a group identifier, for example, a Shared Risk Link Group (SRLG) identifier, which may, for example, comprise a 32 bit number but which in this example is shown as a two digit ordinary number, for simplicity.

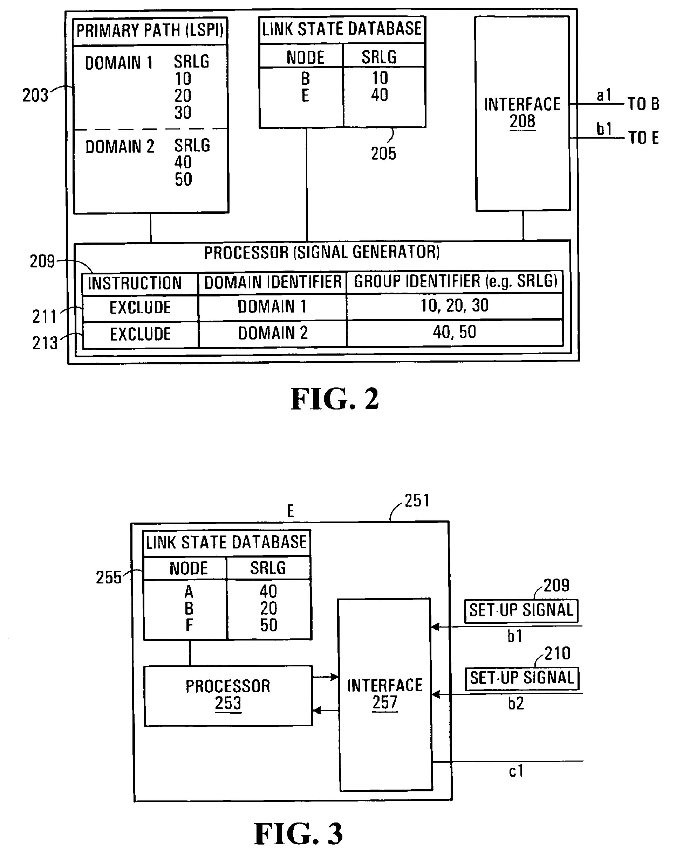

Referring to Fig. 2, which shows a schematic diagram of a network element, once the primary path has been established, the SRLG identifiers of each link on the primary path are recorded in the network element from which the primary path is established, in this case node A. In this embodiment, each SRLG identifier is stored in a table 203 together with an identification of the domain or AS with which the SRLG ID is associated. Thus, the table may be structured to include a plurality of lists of SRLGs each for a different domain. This data may be stored in any suitable memory or other recording medium provided by the network element.

The network element also includes a link state database 205 which includes a list of network elements that are immediately adjacent node A, together with the SRLG identifiers of the associated links.

To set up a secondary path, network element A includes a signal generator (e.g. processor) adapted to generate a set-up signal which includes certain conditions or constraints to be used by network elements in determining the secondary path. The conditions may include a specification of network resources that should be included in and/or excluded from the secondary path. The set-up signal may comprise a data packet (or message) and the specification of each set-up condition may comprise an object in the data packet. Each object may comprise an instruction (e.g. to include or exclude), and one or more sub-objects, e.g. group identifiers to which the instruction relates.

In the example shown in Fig. 2, the network element 201 is adapted to include in the set-up signal 209 an identification of resources that are to be excluded from the secondary path, and in this particular embodiment at least one group identifier. Advantageously, the signal also includes an identification of the domain to which the group identifier belongs so that each node which is involved in setting up the path can determine whether the exclusion(s), e.g. the excluded SRL group(s) applies to the area in which the node resides or not. Generally, if a node determines from the signal that the group identifier belongs to its domain, the node will make a decision regarding which resources to use in setting up the next path section based on the group identifiers. If the node determines that the area associated with the group identifier(s) in the signal is different from that in which the node resides, the node may ignore this portion of the signal.

In the embodiment of Fig. 2, the network element includes in the set-up signal 209 a list of SRLG identifiers of resources on the primary path which are to be excluded when setting up the secondary path, and which may be derived from the table 203. In particular, the signal includes an exclude instruction, and specifies both the group IDs to be excluded and the domain or area to which each group ID belongs. In the embodiment shown in Fig. 2, a section 211 of the signal contains the domain identifier of domain 1 and the group IDs associated with that domain that are used for the primary path, and a section 213 contains a domain identifier for domain 2 and the group identifiers for the primary path in domain 2. This list is used by each node involved in setting up the secondary path to determine which resources must or should be excluded.

In setting up a diverse path, node A is instructed to determine a path which excludes all of the Shared Risk Link Group identifiers of the primary path in domain 1, consults the link state database 205 for a link that meets this condition and transmits the signal to node E over link b1 whose SRLG ID is 40 (i.e. different from any SRLG IDs on the primary path in domain 1). On receiving the signal, node E detects the domain identifier for domain 1 in the signal and the SRLG IDs listed for that domain and makes a path set-up decision based on the conditions prescribed in the signal for domain 1. In this embodiment, the signal indicates that resources having SRLG IDs of 10, 20 and 30 should be excluded, and therefore of possible links b2 and c2, node E selects link B2, whose SRLG ID is 50, as the next path section and which meets the required condition. By specifying in the signal the domain to which specific conditions relate, node E can select from the signal which conditions apply to it and which do not. For example, node E may be adapted to extract from the signal only those conditions that apply to its domain and to ignore conditions that apply to other domains. This may be implemented by conditioning a network element to make a comparison of its record of the domain in which it resides with the domain identifier(s) in the signal. Thus, in the present example, although the primary path includes a link whose SRLG ID is 50, the signal indicates that this SRLG ID is associated with domain 2 and not domain 1 and therefore node E can choose a link having an SRLG ID of 50 to form the secondary path in domain 1.

An embodiment of a network element which may implement the functions described above in connection with node E is shown in Figure 3. The network element 251 comprises a processor 253, a database 255 and an interface 257 connected to (bi-directional) links b1, b2, c1. The processor is arranged to receive set-up signals transmitted to the network element via the interface 257 and is conditioned (e.g. programmed) to detect network domain identifiers attached to path set-up conditions contained in the signal to determine if the signal contains any set-up conditions which apply to the domain in which the network element resides, and this may be performed by comparing domain identifiers in the signal with a record of the domain identifier of a network element, as indicated above. If a match is found, the processor detects the condition associated with the domain identifier and makes a decision based on the detected condition and the information stored in the link state database 255 as to which resources (e.g. node and/or link) to use in configuring the next path section. The processor is adapted to ignore set-up conditions in the signal that are attached to domain identifiers of domains in which the network element does not reside. Once the processor determines the resources for the next path section, the processor may form an appropriate set-up signal and the network element transmits the set-up signal 210 to the next node on the determined communication path.

Other nodes in the first domain, e.g. nodes F and G use the information in a similar manner to that described above to set up respective sections of the secondary path. In this example, the secondary path includes links b3 and b4 which meet the required conditions, and excludes links c1 to c5, which do not as they have the same SRLG Ids as the primary path.

In this example, nodes D and G are border network elements as they lie on the edge of the first domain and nodes P and R are border network elements of the second domain. The link A4 between nodes D and P in the primary path may have an associated SRLG ID, and to exclude this link from the secondary path, the set-up signal may contain the SRLG ID for this link together with an indication that the link is an interdomain link between domains 1 and 2. As node G is a border NE in domain 1, node G may be adapted to detect the indication of an interdomain condition in the signal and apply the condition to the path set-up process. Accordingly, if the signal indicates that SRLGs having an ID of 90 should be excluded, node G can try to determine a link having a different SRLG ID, e.g. link b4 to node R having an SRLG ID of 80.

On receiving the set-up signal from node G, node R in the second domain is adapted to detect the conditions for setting up the secondary path in domain 2 by detecting the domain ID for domain 2 in the set-up signal. In this way, node R can identify which conditions in the signal apply to it when setting up the next path section. In this example, the signal contains a condition that resources having SRLG IDs of 40 and 50 are to be excluded from the secondary path, and therefore node R selects link b5 to node S having an SRLG ID of 30 as the next section for the secondary path. Other nodes, e.g., S, and T in the second domain respond to the set-up signal in a similar manner to exclude from the secondary path links a5 and a6 of the primary path having SRLG IDs of 40 and 50, respectively, and also links c6 and c7 which both have an SRLG ID of 40.

As can be appreciated from the example described above in conjunction with Figs. 1 and 2, specifying both the conditions and the domain ID to which the conditions relate in the set-up signal allows the conditions to be properly implemented when setting up a communication path between different domains, and may be applied when setting up any communication path, including a primary communication path or a secondary communication path, where certain path set-up conditions are to be met. A domain ID may be included in a set-up signal in addition to the group identifier(s) even if the path to be configured traverses a single domain, and may be useful as a verification check.

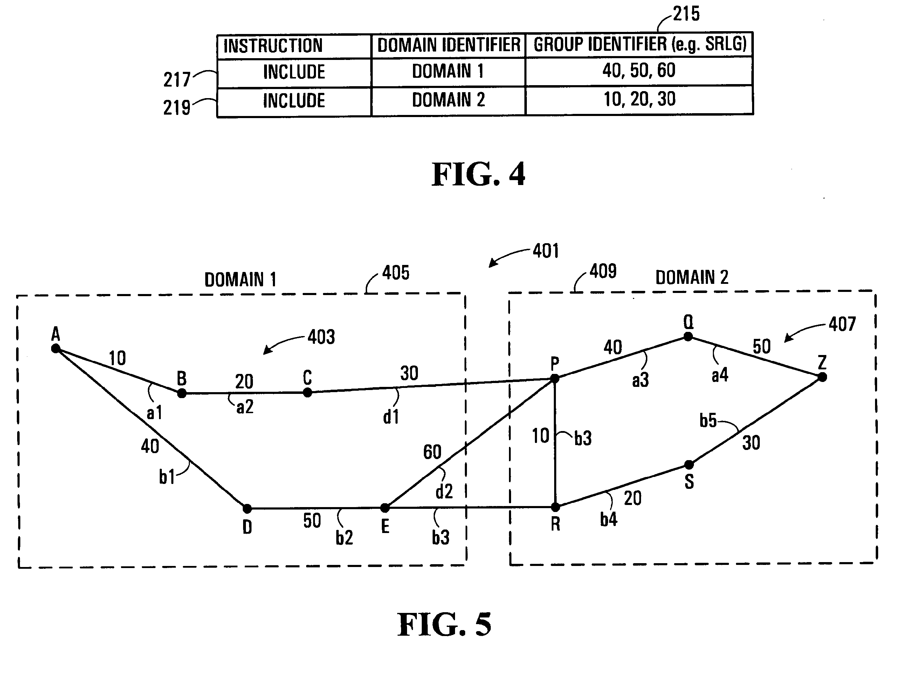

In other embodiments, the set-up signal may include a specification of resources that are to be specifically included in a particular communication path and the signal may indicate for each domain, the particular set of conditions to be implemented, together with an identification of the particular domain to which the conditions relate. Thus, in another embodiment, the set-up signal for configuring a secondary path may include particular SRLG IDs that are to be included in the secondary path, and may or may not also include certain SRLGs that are to be excluded. Returning to the example of Fig. 1, and referring to Fig. 4, in setting up the secondary path, the set-up signal 215 may include a specification 217 that resources having SRLG IDs of 40, 50 and 60 in domain 1 are to be specifically included in the secondary path and a specification 219 that resources having SRLG IDs of 10, 20 and 30 are to be specifically included in the secondary path in domain 2. This implementation may be used as an alternative or in addition to the exclusion instructions shown in Fig. 2, and would also lead to the desired result of excluding primary path resources from the secondary path.

The set-up packet(s) may have any suitable configuration, depending on the system protocol. For example, the set-up signal may be constructed so that the domain identifier associated with the condition is detected by the network element processor before the condition, so that the processor can determine first if the condition is applicable to its path set-up decision. The examples shown in Figures 2 and 3, in which the instruction is indicated first and the domain identifier second, is not necessarily indicative of the order in which they would be placed in a data packet, and in another embodiment, the domain identifier may be placed before the instruction.

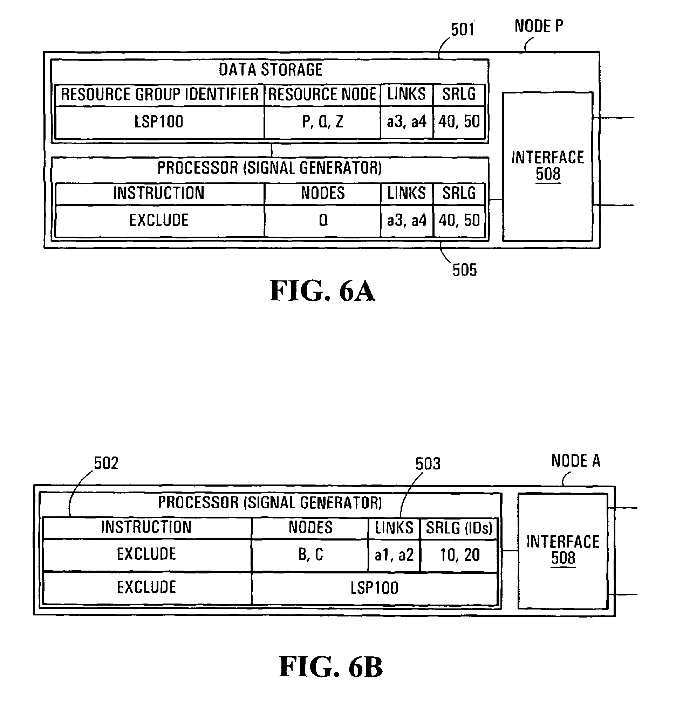

Another aspect of the present invention allows the information content of communication path set-up signals to be reduced. An embodiment of this aspect of the present invention is described below with reference to Figs. 5, 6A and 6B. Fig. 5 shows a communication network 401 comprising a first network 403 in a first domain 405 and a second network 407 in a second domain 409. A primary communication path is established between node A in the first domain and node Z in the second domain and includes nodes A, B, C, P, Q and Z, and links a1, a2, d1, a3 and a4. Node P is a border PE (Peer Element) of the second domain 409 and is adapted to store information about the resources in domain 2 used for the primary path. This may include an identification of the nodes, links and/or SRLG identifiers associated with the links. A label or identifier is assigned to this information (for example by node P), as an alternative means or alias by which the information can be referred. The identifier generally identifies a group of one or more network resources (e.g. nodes, ports, links) or sub-groups of resources (e.g. SRLG ID's) and may be referred to as a resource group identifier. In the example shown in Figure 5A, the resource group identified by the resource group identifier LSP100 includes resources on the primary path in domain 2, and the record 501 stored at node P includes a data structure comprising the resource group identifier and resource identifiers identifying the resources in the group. In one embodiment, the data structure may comprise a lookup table.

The resource group identifier is transmitted to the node from which the path is to be set-up, in this case node A and used by node A to generate signalling to determine a secondary path between nodes A and Z. Referring to Fig. 6B, node A generates a set-up signal 502 which includes a list 503 of primary path resources that should be excluded in configuring the secondary path. The list 503 may, for example, comprise an Exclude Route Object (XRO) in a RSVP-TE set-up signal. In this particular embodiment, the list includes nodes B and C, links a1 and a2 and the SRLG identifiers 10, 20 for links a1 and a2 respectively. In addition, the list also specifies the resource group identifier, in this case is LSP100, which is used to identify the primary path resources in the second domain. Using a resource group identifier to identify domain 2 primary path resources in the set-up signal that traverses domain 1 serves two purposes. Firstly, as the group identifier can be shorter than a list of all individual resource identifiers in the group, it reduces the set-up signal overhead by reducing the space required to specify the primary path resources of domain 2, and secondly it prevents the domain 2 primary path resources being revealed to other domain resources such as network elements in domain 1.

In a first embodiment, the set-up signal specifies that the secondary path must include border network element P, and this may be implemented in the signal by specifying node P as an object in an Include list (not shown).

In setting up the first leg or hop of the secondary path, node A is instructed to select a node other than node B and/or a link other than link a1 and a resource having an SRLG ID other than 10. In this example, node A selects node D and transmits the set-up signal to node D over link b1 having an SRLG ID of 40. An area or domain identifier identifying domain 1 may optionally be included in the set-up signal to indicate that domain 1 objects in the exclude list are associated with domain 1.

On receiving the set-up signal from node A, node D determines from the exclude list resources to be excluded from the secondary path and selects node E over link b2 as the next path section. Node D is also adapted to ignore the resource group identifier LSP100, since, for example, it has no record of the identifier and cannot attribute any meaning to it.

On receiving the set-up signal from node D, node E determines from the set-up signal (which in this embodiment includes a specification that the secondary path must include node P) that the next section of the secondary path is to node P over link d2. Again, node E is adapted to ignore the path resource label LSP100.

In one embodiment, one or more nodes in the first domain may be adapted to remove objects from the exclude list when a determination is made that they are no longer required. This has the advantage of reducing signal overhead and only passing information in the set-up signal that is required for downstream nodes or interfaces. For example, in one embodiment, a node in one domain that determines the next path section to a node (e.g. border PE) in another domain may be adapted to remove at least one or more objects from the exclude and/or include lists to prevent resource information about one domain passing to another domain. Thus, for example, node E may be adapted to strip resource information pertaining to domain 1 from the exclude list 503. In this case, the set-up signal transmitted from node E to node P may include as an exclude object only the resource group identifier LSP100 (and possibly other resource group identifiers for other domains, for example, if the path is to extend beyond node Z to a node in another domain). Other nodes, upstream of the border PE may also implement a stripping function to reduce the information contained in the set-up signal. For example, node D may be adapted to remove certain information from the exclude list for domain 1 which is no longer required, such as information relating to the first section of the primary path (e.g. node B, link a1 and SRLG ID's 10).

On receiving the set-up signal from node E, node P detects the resource group identifier LSP100 and determines from its record 501 the resources in domain 2 that are associated with this identifier. This may be carried out by performing a lookup function in a lookup table stored in a memory at node P. In one embodiment, node P generates a set-up signal which specifies the particular resources that are to be excluded when forming a secondary path through domain 2 (to avoid resources of the primary path) and which may be included in an exclude list.

In this example, the set-up signal generated by node P includes an exclude list 505, shown in Figure 6A, which contains node Q, links a3, a4 and SRLG ID's 40 and 50. In computing the first path section of the secondary path in domain 2, node P is instructed to exclude node Q and selects (for example, from its link state database (not shown)) node R over link b3 as the first path section.

On receiving the set-up signal from node P, node R detects the resources in the exclude list to be excluded from the secondary path and selects node S over link b4 as the next path section. Similarly, on receiving the set-up signal from node R, node S reads the resource identifiers in the exclude list and determines node Z over link b5 as the next, and in this case last, secondary path section.

In the example described above, the secondary path includes a resource of the primary path, i.e. node P, and this potentially constitutes a weakness in the secondary path as alternative routing between nodes A and Z. Another embodiment of the present invention enables resource group identifiers to be used without needing to route the secondary path through a primary path node. This may be achieved by advertising the resource group identifier and the resources associated therewith to one or more other nodes within the same domain, for example one or more other border PE's. Returning to the example shown in Fig. 4, node P may be adapted to advertise the resource group identifier and resources associated therewith to node R which also constitutes a border PE. Node R records this information and is adapted to respond to a set-up signal containing the resource group identifier. Node P may also advertise the path group identifier to one or more other border PE's in domain 2 to increase the number of the border PE's in domain 2 through which the secondary path can be formed.

Returning to the example described above, the set-up signal generated at node A may be adapted to specify that node P should be excluded from the secondary path (rather than specifically included, as in the first example). On receiving the set-up signal from node D, node E determines that node P should be excluded from the secondary path and selects an alternative border PE in domain 2, and in this case selects node R over link b3 as the next path section. Node E transmits a set-up signal, which includes the resource group identifier LSP100, to node R, and which may omit information about resources in domain 1, as described above. On receiving the set-up signal from node E, node R detects the resource group identifier in the signal, compares the detected resource group identifier to a record of resource group identifier(s) stored at node R, and on finding a match, determines the domain 2 resources that are to be excluded when forming the secondary path. Node R then generates a set-up signal which may specify the specific resources to be excluded from the secondary path, as, for example, described above for node P. In this case the set-up signal may include the resource identifiers for nodes P and Q, links a3 and a4 and SRLG IDs 40, 50.

Alternatively, if node P is adapted to advertise the resource group identifier and resources associated therewith to a number of nodes or all nodes in the second domain, so that a number of nodes or all nodes in domain 2 have a record of both the resource group identifier and resources associated therewith, the set-up signal for determining a path in the second domain need only include the resource group identifier, thereby reducing set-up signal overhead.

In another embodiment, the primary path border PE in the second domain may be adapted to advertise the resource group identifier to a restricted number of nodes, e.g. border PE's within its domain. In setting up the secondary path, the set-up signal from one domain may initially be passed to the same border PE of the primary path in another domain. This border PE may signal back to a node in the first domain (e.g. egress node) the identity of another border PE in the second domain to be used for the secondary path. To illustrate this, reference may be had to the example in Fig. 5. In this case, the initial set-up signal from node A includes an instruction to consult node P when forming the secondary path. When node P receives the set-up signal from node E, it responds by identifying one or more alternative border PE's in the second domain through which the secondary path can be routed and transmits this information back to node E. Node E cbtermines from the signal a border PE in the second domain other than node P to which to configure the next path section, and, in this example, selects node R as the border PE and transmits the set-up signal to node R over link b3. Again, in forming the set-up signal, node E may remove information about resources in the first domain so that this information is not transmitted into the second domain.

Advantageously, this arrangement in which only selected border PE's receive the resource group identifier and an identification of the resources associated therewith reduces the amount of information that needs to be stored by nodes in the second domain thereby improving the scalability of the system.

Embodiments of the invention have been described by way of non-limiting examples only to illustrate the principles of various aspects of the invention, and it will be appreciated that the principles of the invention can be applied to any suitable network and to configuring any communication path whether it traverses a single domain or any number of different domains.

For example, in one embodiment, a resource group identifier may be used to identify a group of resources in the first domain which contains the source node from which the path is to be set-up. This resource group identifier may be used in the set-up signalling to obviate the need to explicitly identify the particular resources in the first domain that should be included or excluded when forming a path. However, this embodiment assumes that nodes in the first domain have the capability of interpreting the resource group identifier, and therefore assumes some prior signalling to each node such as an advertisement from the source node to provide this capability.

In other embodiments set-up signalling from the source node may include resource group identifiers for a plurality of different domains and which can only be correctly interpreted by one or more nodes in the relevant domains. Once it is determined that information about resources in a particular domain in the set-up signal is no longer required the information may be stripped from the set-up signal before being passed to the next domain, if any, to simplify the set-up signal and to ensure resource information about one domain is not revealed to another.

Other embodiments of the present invention may include any feature disclosed herein in combination with any one or more other feature disclosed herein.

Modifications to the embodiments described herein will be apparent to those skilled in the art.

## Claims

1. A method of forming a signal for configuring a communication path between first and second network elements (A, Z) of a communication network (100), comprising:
selecting at least one group identifier (10, 20, 30; 40, 50) used to identify a plurality of network resources in a predetermined network domain (105, 109) and between said first and second network elements (A, Z); and
forming a path set-up signal(209) for causing one or more network elements to configure a communication path **characterized by** specifying in said signal (209) said at least one group identifier (10, 20, 30; 40, 50), a network domain identifier which indicates that said at least one group identifier is associated with said network domain- 105, 109), and an indication that said network resources in said domain having said at least one group identifier should be one of included in and excluded from said communication path.

2. A method as claimed in claim 1, wherein said at least one group identifier (10, 20, 30; 40, 50) is used to identify a plurality of network resources (a1, c1; a5, c6) in said predetermined network domain (105, 109) having a common property.

3. A method as claimed in claim 1 or 2, further comprising selecting one or more identifiers (40, 50) used to identify one or more network resources in another predetermined network domain (109); and
specifying in said signal(209) said one or more identifiers (40, 50) and a network domain identifier for said other network domain (109) which indicates that said one or more identifiers is associated with said other predetermined network domain (109).

4. A method as claimed in claim 3, further comprising specifying in said signal (209) an indication that said one or more network resources in said other predetermined network domain (109) having one or more identifiers (40, 50) should be one of included in and excluded from said communication path.

5. A method as claimed in claim 3 or 4, wherein said one or more identifiers (40, 50) each comprises a group identifier for identifying a plurality of network resources (a5, c6; a6) in said other predetermined network domain (109).

6. A method as claimed in claim 1, wherein said group identifier comprises a resource group identifier (LSP100) used to identify a group of resources on a pre-configured network path.

7. A method as claimed in claim 6, further comprising the step of selecting one or more resources, and assigning said resource group identifier (LSP100) to said one or more resources.

8. A method as claimed in claim 7, wherein said resource group identifier (LSP100) is assigned only to resources in the same predetermined network domain.

9. A method as claimed in any one of claims 6 to 8, further comprising one of (1) receiving said resource group identifier (LSP100) at a network element (P, R) in one network domain (409) from another network element (E) in another network domain (405), and (2) receiving said resource group identifier (LSP100) at a network element (P, R) from a record (501) containing said resource group identifier (LSP100) in the same network element (P, R).

10. A method of determining a communication path comprising the steps of:
receiving at a network element (E, F, G, R, T) a communication path set-up signal (209) containing at least one group identifier (10, 20, 30; 40, 50) used to identify a plurality of network resources (a1, c2; a5, c6, c7), an indication that said at least one group identifier is associated with a predetermined network domain (105, 109) and a further indication that said network resources should be one of included in and excluded from a communication path;
detecting the indication of said network domain (105, 109) in said signal (209);
based on the detected network domain (105, 109), determining whether or not to include said at least one group identifier (10, 20, 30; 40, 50) and said further indication in a decision on determining said communication path; and
determining said communication path.

11. A method as claimed in claim 10, further comprising determining whether to include or exclude from said communication path a network resource associated with said at least one group identifier (10, 20, 30; 40, 50) if said detected network domain (105, 109) is the same as that of said network element (E, F, G, R, T).

12. A method as claimed in claim 11, further comprising excluding from consideration in determining said communication path network resources (E, F, G, R, T) having any group identifiers associated with a detected network domain (105, 109) in said signal (209) if the detected domain is different from that of said network element (E, F, G, R, T).

13. A method as claimed in any one of claims 1 to 3 or 10 to 12, wherein at least one of (1) said plurality of network resources comprise communication path sections (a1, a2, a3), and (2) said group identifier comprises a shared risk link group (SRLG) identifier.

14. A method as claimed in claim 10, further comprising identifying from a record (255, 501) a resource identifier (A, B, F; P, Q, Z). of one or more resources associated with said group identifier (40, 20, 50; LSP100), and forming a signal containing a resource identifier (A, B, F; P, Q, Z) of at least one resource identified from said record (255, 501).

15. A method as claimed in claim 14, further comprising including in said signal (209) an instruction associated with said resource identifier (40, 20, 50; LSP100) for causing a network element (E, F, G, R, T, D, E, R, S) to make a decision based on said instruction and the resource identified in said signal (209).

16. A method a claimed in claim 14 or 15, wherein each resource comprises a resource within the same domain (105, 109, 405, 409).

17. A network element (A) comprising signal forming means for forming, for transmission on a network (100), a path set-up signal (209) for configuring a communication path between first and second network elements (A, Z),
**characterized in that** said signal forming means is adapted to include in said signal (209) at least one group identifier (10, 20, 30; 40, 50) used to identify a plurality of network resources (a1, c2; a5, c6, c7) in a predetermined network domain (105, 109) and between said first and second network elements (A, Z), a network domain identifier indicating that said at least one group identifier is associated with said network domain (105, 109), and an indication that said network resources in said domain having said at least one group identifier should be one of included in and excluded from said communication path.

18. A network element (A) as claimed in claim 17,
wherein said signal forming means is adapted to specify in said signal (209) one or more further identifiers (40, 50), each further identifier used to identify one or more network resources (a5, c6, c7; a6) in another predetermined network domain (109), and to specify in said signal (209) an identifier for said other network domain indicating that said one or more further identifiers is associated with said other predetermined network domain.

19. A network element (A) as claimed in claim 18,
wherein said signal forming means is adapted to specify in said signal (209) an indication that said one or more network resources (a5, c6, c7; a6) in said other network domain (109) having said one or more further identifiers should be one of included in and excluded from said communication path.

20. A network element (A) as claimed in claim 18 or 19, wherein said one or more further identifiers (40, 50)
each comprises a group identifier (40, 50) for identifying a plurality of network resources (a5, c6, c7; a6) in said other predetermined network domain (109).

21. A network element (A) as claimed in claim 17,
wherein said group identifier comprises a resource group identifier (LSP100) used to identify a group of resources on a pre-configured network path.

22. A network element (A) as claimed in claim 21,
wherein said network element resides in a predetermined network domain (405) and said resource group identifier (LSP100) is associated with one or more resources in another network domain (409).

23. A network element (E, F, G, R, T, D, E, R, S) comprising receiving means (257) for receiving a communication path set-up signal (209) containing at least one group identifier (10, 20, 30; 40, 50) used to identify a plurality of network resources (a1, c2; a5, c6, c7), an indication that said at least one group identifier is associated with a predetermined network domain (105, 109) and a further indication that said network resources should be one of included in and excluded from a communication path,
detecting means (253) for detecting the indication of said network domain in said signal (209),
first determining means (253) for determining, based on the detected network domain (105, 109), whether or not to include said at least one group identifier (10, 20, 30; 40, 50) and said further indication in a decision on configuring a communication path; and
second determining means (253) for determining said communication path.

24. A network element as claimed in claim 23, wherein said second determining means (253) is adapted to determine whether to include or exclude from said communication path a network resource associated with said at least one group identifier (10, 20, 30; 40, 50) if said detected network domain (105, 109) is the same as that of said network element.

25. A network element as claimed in any one of claims 17 to 20, 23 or 24, wherein at least one of (1) said plurality of network resources (a1, c2, a2, c1 a3, c4) comprise communication path sections, and (2) said group identifier comprises a shared risk link group (SRLG) identifier.

26. A network element as claimed in claim 23, further comprising storage means (255, 501) containing a record of said group identifier (40, 20, 50, LSP100) and associated with said group identifier a respective resource identifier identifying each of said resources in said group,
comparing means for comparing the group identifier in said signal to said group identifier in said record, and
signal forming means (253, 503) responsive to a result of the comparison for forming a signal for configuring a communication path.

27. A network element as claimed in claim 26, wherein said signal forming means is adapted to include in said signal at least one of said group identifier (40, 20, 50, LSP100) and a resource identifier (Q, a3, a4, 40, 50) of at least one resource associated with said group identifier.

## Patentansprüche

1. Ein Verfahren zur Bildung eines Signals zum Konfigurieren eines Kommunikationspfads zwischen ersten und zweiten Netzwerkelementen (A, Z) eines Kommunikationsnetzwerks (100), umfassend:
Das Auswählen mindestens einer Gruppenkennung (10, 20, 30; 40, 50), welche verwendet wird, um eine Vielzahl von Netzwerkressourcen in einer vorgegebenen Netzwerkdomäne (105, 109) und zwischen den besagten ersten und zweiten Netzwerkelementen (A, Z) zu identifizieren; und
das Bilden eines Pfadaufbausignals (209), um zu bewirken, dass ein oder mehrere Netzwerkelemente einen Kommunikationspfad konfigurieren, **dadurch gekennzeichnet, dass** die besagte mindestens eine Gruppenkennung (10, 20, 30; 40, 50), eine Netzwerkdomänenkennung, welche angibt, dass die besagte mindestens eine Gruppenkennung mit der besagten Netzwerkdomäne (105, 109) assoziiert ist, und eine Angabe, dass die besagten Netzwerkressourcen in der besagten Domäne mit der besagten mindestens einen Gruppenkennung entweder in den besagten Kommunikationspfad eingeschlossen oder davon ausgeschlossen werden sollen, in dem besagten Signal (209) spezifiziert werden.

2. Ein Verfahren nach Anspruch 1, wobei die besagte mindestens eine Gruppenkennung (10, 20, 30; 40, 50) verwendet wird, um eine Vielzahl von Netzwerkressourcen (a1, c1; a5, c6) in der besagten vorgegebenen Netzwerkdomäne (105, 109), welche ein gemeinsames Merkmal aufweisen, zu identifizieren.

3. Ein Verfahren nach Anspruch 1 oder 2, weiterhin umfassend das Auswählen einer oder mehrerer Kennungen (40, 50), welche verwendet werden, um eine oder mehrere Netzwerkressourcen in einer anderen vorgegebenen Netzwerkdomäne (109) zu identifizieren; und
das Spezifizieren, in dem besagten Signal (209), der besagten einen oder mehreren Kennungen (40, 50) sowie einer Netzwerkdomänenkennung für die besagte andere Netzwerkdomäne (109), welche angibt, dass die besagte eine oder die besagten mehreren Kennungen mit der besagten anderen vorgegebenen Netzwerkdomäne (109) assoziiert ist/sind.

4. Ein Verfahren nach Anspruch 3, weiterhin umfassend das Spezifizieren, in dem besagten Signal (209), einer Angabe, dass die besagte eine oder die besagten mehreren Netzwerkressourcen in der besagten anderen vorgegebenen Netzwerkdomäne (109) mit einer oder mehreren Kennungen (40, 50) entweder in dem besagten Kommunikationspfad eingeschlossen oder davon ausgeschlossen werden soll/sollen.

5. Ein Verfahren nach Anspruch 3 oder 4, wobei die besagte erste oder die besagten mehreren Kennungen (40, 50) jeweils eine Gruppenkennung zum Identifizieren einer Vielzahl von Netzwerkressourcen (a5, c6; a6) in der besagten anderen vorgegebenen Netzwerkdomäne (109) umfasst/umfassen.

6. Ein Verfahren nach Anspruch 1, wobei die besagte Gruppenkennung eine Ressourcengruppenkennung (LSP100) umfasst, welche verwendet wird, um eine Gruppe von Ressourcen auf einem vorkonfigurierten Netzwerkpfad zu identifizieren.

7. Ein Verfahren nach Anspruch 6, weiterhin umfassend den Schritt des Auswählens einer oder mehrerer Ressourcen und des Zuweisens der besagten Ressourcengruppenkennung (LSP100) an die besagte eine oder mehreren Ressourcen.

8. Ein Verfahren nach Anspruch 7, wobei die besagte Ressourcengruppenkennung (LSP100) nur an Ressourcen in einer selben vorgegebenen Netzwerkdomäne zugewiesen wird.

9. Ein Verfahren nach einem beliebigen der Ansprüche 6 bis 8, weiterhin umfassend entweder (1) das Empfangen der besagten Ressourcengruppenkennung (LSP100) an einem Netzwerkelement (P, R) in einer Netzwerkdomäne (409) von einem anderen Netzwerkelement (E) in einer anderen Netzwerkdomäne (405), oder (2) das Empfangen der besagten Ressourcengruppenkennung (LSP100) an einem Netzwerkelement (P, R) aus einem Verzeichnis (501), welches die besagte Ressourcengruppenkennung (LSP100) enthält, in dem selben Netzwerkelement (P, R).

10. Ein Verfahren zum Bestimmen eines Kommunikationspfads, welches die folgenden Schritte umfasst:
Empfangen, an einem Netzwerkelement (E, F, G, R, T), eines Kommunikationspfadaufbausignals (209), welches mindestens eine Gruppenkennung (10, 20, 30; 40, 50), die verwendet wird, um eine Vielzahl von Netzwerkressourcen (a1, c2; a5, c6, c7) zu identifizieren, eine Angabe, dass die besagte mindestens eine Gruppenkennung mit einer vorgegebenen Netzwerkdomäne (105, 109) assoziiert ist, und eine weitere Angabe, dass die besagten Netzwerkressourcen entweder in einen Kommunikationspfad eingeschlossen oder davon ausgeschlossen werden sollen, enthält;
Erfassen der Angaben der besagten Netzwerkdomäne (105, 109) in dem besagten Signal (209);
auf der Basis der erfassten Netzwerkdomäne (105, 109), Bestimmen, ob die besagte mindestens eine Gruppenkennung (10, 20, 30; 40, 50) und die besagte weitere Angabe in eine Entscheidung über die Bestimmung des besagten Kommunikationspfads eingeschlossen werden sollen oder nicht; und
Bestimmen des Kommunikationspfads.

11. Ein Verfahren nach Anspruch 10, weiterhin umfassend das Bestimmen, ob eine mit der besagten mindestens einen Gruppenkennung (10, 20, 30; 40, 50) assoziierte Netzwerkressource in den besagten Kommunikationspfad eingeschlossen oder davon ausgeschlossen werden soll, wenn die besagte erfasste Netzwerkdomäne (105, 109) dieselbe ist wie die Netzwerkdomäne des besagten Netzwerkelements (E, F, G, R, T).

12. Ein Verfahren nach Anspruch 11, weiterhin umfassend das Nichtberücksichtigen, bei der Bestimmung des besagten Kommunikationspfads, von Netzwerkressourcen (E, F, G, R, T) mit irgendwelchen mit einer erfassten Netzwerkdomäne (105, 109) assoziierten Gruppenkennungen in dem besagten Signal (209), wenn die erfasste Domäne eine andere ist als die des besagten Netzwerkelements (E, F, G, R, T).

13. Ein Verfahren nach einem beliebigen der Ansprüche 1 bis 3 oder 10 bis 12, wobei mindestens entweder (1) die besagte Vielzahl von Netzwerkressourcen Kommunikationspfadabschnitte (a1, a2, a3) umfasst, oder (2) die besagte Gruppenkennung eine Kennung einer geteilten Risikoverbindungsgruppe (SRLG) umfasst.

14. Ein Verfahren nach Anspruch 10, weiterhin umfassend das Identifizieren, aus einem Verzeichnis (255, 501), einer Ressourcenkennung (A, B, F; P, Q, Z) einer oder mehrerer mit der besagten Gruppenkennung (40, 20, 50; LSP100) assozierten Ressourcen, und Bilden eines Signals, welches eine Ressourcenkennung (A, B, F; P, Q, Z) mindestens einer aus dem besagten Verzeichnis (255, 501) identifizierten Ressource enthält.

15. Ein Verfahren nach Anspruch 14, weiterhin umfassend das Einschließen, in dem besagten Signal (209), einer mit der besagten Ressourcenkennung (40, 20, 50; LSP100) assoziierten Anweisung, um zu bewirken, dass ein Netzwerkelement (E, F, G, R, T, D, E, R, S) eine Entscheidung auf der Basis der besagten Anweisung und der im besagten Signal (209) identifizierten Ressource trifft.

16. Ein Verfahren nach Anspruch 14 oder 15, wobei jede Ressource eine Ressource innerhalb derselben Domäne (105, 109, 405, 409) umfasst.

17. Ein Netzwerkelement (A) mit einem Signalbildungsmittel zum Bilden, für die Übertragung auf einem Netzwerk (100), eines Pfadaufbausignals (209) zum Konfigurieren eines Kommunikationspfads zwischen ersten und zweiten Netzwerkelementen (A, Z),
**dadurch gekennzeichnet, dass** das besagte Signalbildungsmittel dazu ausgelegt ist, mindestens eine Gruppenkennung (10, 20, 30; 40, 50), welche verwendet wird, um eine Vielzahl von Netzwerkressourcen (a1, c2; a5, c6, c7) in einer vorgegebenen Netzwerkdomäne (105, 109) und zwischen den besagten ersten und zweiten Netzwerkelementen (A, Z) zu identifizieren, eine Netzwerkdomänenkennung, welche angibt, dass die besagte mindestens eine Gruppenkennung mit der besagten Netzwerkdomäne (105, 109) assoziiert ist, und eine Angabe, dass die besagten Netzwerkressourcen in der besagten Domäne mit mindestens einer Gruppenkennung entweder in den besagten Kommunikationspfad eingeschlossen oder davon ausgeschlossen werden sollen, in das besagte Signal (209) einzuschließen.

18. Ein Netzwerkelement (A) nach Anspruch 17, wobei das besagte Signalbildungsmittel dazu ausgelegt ist, in dem besagten Signal (209) eine oder mehrere weitere Kennungen (40, 50) zu spezifizieren, wobei jede weitere Kennung zum Identifizieren einer oder mehrerer Netzwerkressourcen (a5, c6, c7; a6) in einer anderen vorgegebenen Netzwerkdomäne (109) verwendet wird, und in dem besagten Signal (209) eine Kennung für die besagte andere Netzwerkdomäne zu spezifizieren, welche angibt, dass die besagte eine oder die besagten mehreren weiteren Kennungen mit der besagten anderen vorgegebenen Netzwerkdomäne assoziiert ist/sind.

19. Ein Netzwerkelement (A) nach Anspruch 18, wobei das besagte Signalbildungsmittel dazu ausgelegt ist, in dem besagten Signal (209) eine Angabe, dass die besagte eine oder die besagten mehreren Netzwerkressourcen (a5, c6, c7; a6) in der besagten anderen Netzwerkdomäne (109) mit der besagten einen oder den besagten mehreren Kennungen entweder in dem besagten Kommunikationspfad eingeschlossen oder davon ausgeschlossen werden soll/sollen, zu spezifizieren.

20. Ein Netzwerkelement (A) nach Anspruch 18 oder 19, wobei die besagte eine oder die besagten mehreren weiteren Kennungen (40, 50) jeweils eine Gruppenkennung (40, 50) zum Identifizieren einer Vielzahl von Netzwerkressourcen (a5, c6, c7; a6) in der besagten anderen vorgegebenen Netzwerkdomäne (109) umfassen.

21. Ein Netzwerkelement (A) nach Anspruch 17, wobei die besagte Gruppenkennung eine Ressourcengruppenkennung (LSP100) umfasst, welche verwendet wird, um eine Gruppe von Ressourcen auf einem vorkonfigurierten Netzwerkpfad zu identifizieren.

22. Ein Netzwerkelement (A) nach Anspruch 21, wobei das besagte Netzwerkelement in einer vorgegebenen Netzwerkdomäne (405) angeordnet und die besagte Ressourcengruppenkennung (LSP100) mit einer oder mehreren Ressourcen in einer anderen Netzwerkdomäne (409) assoziiert ist.

23. Ein Netzwerkelement (E, F, G, R, T, D, E, R, S), umfassend: Empfangsmittel (257) zum Empfangen eines Kommunikationspfadaufbausignals (209), welches mindestens eine Gruppenkennung (10, 20, 30; 40, 50), die zum Identifizieren einer Vielzahl von Netzwerkressourcen (a1, c2; a5, c6, c7) verwendet wird, eine Angabe, dass die besagte mindestens eine Gruppenkennung mit einer vorgegebenen Netzwerkdomäne (105, 109) assoziiert ist, und eine weitere Angabe, dass die besagten Netzwerkressourcen in einen Kommunikationspfad eingeschlossen oder davon ausgeschlossen werden sollen, enthält,
Erfassungsmittel (253) zum Erfassen der Angabe der besagten Netzwerkdomäne in dem besagten Signal (209),
erste Bestimmungsmittel (253) zum Bestimmen, auf der Basis der erfassten Netzwerkdomäne (105, 109), ob die besagte mindestens eine Gruppenkennung (10, 20, 30, 40, 50) und die besagte weitere Angabe in einer Entscheidung über die Konfigurierung eines Kommunikationspfads eingeschlossen werden soll oder nicht; und
zweite Bestimmungsmittel (253) zum Bestimmen des besagten Kommunikationspfads.

24. Ein Netzwerkelement nach Anspruch 23, wobei das besagte zweite Bestimmungsmittel (253) dazu ausgelegt ist, zu Bestimmen, ob eine mit mindestens einer Gruppenkennung (10, 20, 30; 40, 50) assoziierte Netzwerkressource in den besagten Kommunikationspfad eingeschlossen oder davon ausgeschlossen werden soll, wenn die besagte ermittelte Netzwerkdomäne (105, 109) dieselbe ist wie die des besagten Netzwerkelements.

25. Ein Netzwerkelement nach einem beliebigen der Ansprüche 17 bis 20, 23 oder 24, wobei mindestens entweder (1) die besagte Vielzahl von Netzwerkressourcen (a1, c2, a2, c1, a3, c4) Kommunikationspfadabschnitte umfasst, oder (2) die besagte Gruppenkennung eine Kennung einer geteilten Risikoverbindungsgruppe (SRLG) umfasst.

26. Ein Netzwerkelement nach Anspruch 23, weiterhin umfassend Speichermittel (255, 501), welche ein Verzeichnis der besagten Gruppenkennung (40, 20, 50, LSP100) sowie eine entsprechende, mit der besagten Gruppenkennung assoziierte Ressourcenkennung zum Identifizieren einer jeden der besagten Ressourcen in der besagten Gruppe enthalten,
Vergleichsmittel zum Vergleichen der Gruppenkennung in dem besagten Signal mit der Gruppenkennung in dem besagten Verzeichnis, und
Signalbildungsmittel (253, 503), welches auf ein Ergebnis des Vergleichens reagiert, indem es ein Signal zum Konfigurieren eines Kommunikationspfads bildet.

27. Ein Netzwerkelement nach Anspruch 26, wobei das besagte Signalbildungsmittel dazu ausgelegt ist, mindestens entweder die besagte Gruppenkennung (40, 20, 50, LSP100) oder eine Ressourcenkennung (Q, a3, a4, 40, 50) mindestens einer mit der besagten Gruppenkennung assoziierten Ressource in das besagte Signal einzuschließen.

## Revendications

1. Procédé de mise en forme d'un signal pour configurer un trajet de communication entre un premier et un deuxième éléments de réseau (A, Z) d'un réseau de communication (100), comprenant :
Sélection d'au moins un identifiant de groupe (10, 20, 30 ; 40, 50) utilisé pour identifier une pluralité de ressources de réseau dans un domaine de réseau prédéterminé (105, 109) et entre ledit premier et deuxième éléments de réseau (A, Z) ; et
Formation d'un signal d'établissement de trajet (209) pour amener un ou plusieurs éléments de réseau à configurer un trajet de communication, **caractérisé par** la spécification dans ledit signal (209) dudit au moins un identifiant de groupe (10, 20, 30 ; 40, 50), d'un identifiant de domaine de réseau qui indique que ledit au moins un identifiant de groupe est associé audit domaine de réseau (105, 109) et d'une indication selon laquelle lesdites ressources de réseau dans ledit domaine ayant ledit au moins un identifiant de groupe devraient être l'une de celles incluses dans et l'une de celles exclues dudit trajet de communication.

2. Procédé selon la revendication 1, dans lequel ledit au moins un identifiant de groupe (10, 20, 30 ; 40, 50) est utilisé pour identifier une pluralité de ressources de réseau (a1, c1 ; a5, c6) dans ledit domaine de réseau prédéterminé (105, 109) ayant une propriété commune.

3. Procédé selon la revendication 1 ou 2, comprenant en outre la sélection d'un ou plusieurs identifiants (40, 50) utilisés pour identifier une ou plusieurs ressources de réseau dans un autre domaine de réseau (109) prédéterminé ; et
spécification dans ledit signal (209) dudit un ou plusieurs identifiants (40, 50) et d'un identifiant de domaine de réseau pour ledit autre domaine de réseau (109) qui indique que ledit un ou lesdits plusieurs identifiants est/sont associés audit autre domaine de réseau (109) prédéterminé.

4. Procédé selon la revendication 3, comprenant en outre la spécification dans ledit signal (209) d'une indication selon laquelle ladite une ou lesdites plusieurs ressources de réseau dans ledit autre domaine de réseau prédéterminé (109) ayant un ou plusieurs identifiants (40, 50) devraient être l'une de celles incluses dans et l'une de celles exclues dudit trajet de communication.

5. Procédé selon la revendication 3 ou 4, dans lequel ledit un ou lesdits plusieurs identifiants (40, 50) comprennent chacun un identifiant de groupe pour identifier une pluralité de ressources de réseau (a5, c6 ; a6) dans ledit autre domaine de réseau (109) prédéterminé.

6. Procédé selon la revendication 1, dans lequel ledit identifiant de groupe comprend un identifiant de groupe de ressources (LSP100) utilisé pour identifier un groupe de ressources sur un trajet de réseau préconfiguré.

7. Procédé selon la revendication 6, comprenant en outre l'étape de sélection d'une ou plusieurs ressources et d'affectation dudit identifiant de groupe de ressources (LSP100) à ladite ou auxdites ressources.

8. Procédé selon la revendication 7, dans lequel ledit identifiant de groupe de ressources (LSP100) est affecté uniquement aux ressources dans le même domaine de réseau prédéterminé.

9. Procédé selon l'une quelconque des revendications 6 à 8, comprenant en outre une étape de (1) réception dudit identifiant de groupe de ressources (LSP100) au niveau d'un élément de réseau (P, R) dans un domaine de réseau (409) de la part d'un autre élément de réseau (E) dans un autre domaine de réseau (405) ou l'étape de (2) réception dudit identifiant de groupe de ressources (LSP100) au niveau d'un élément de réseau (P, R) par un enregistrement (501) contenant ledit identifiant de groupe de ressources (LSP100) dans le même élément de réseau (P, R).

10. Procédé de détermination d'un trajet de communication comprenant les étapes suivantes :
Réception au niveau d'un élément de réseau (E, F, G, R, T) d'un signal d'établissement (209) de trajet de communication contenant au moins un identifiant de groupe (10, 20, 30 ; 40, 50) utilisé pour identifier une pluralité de ressources de réseau (a1, c2 ; a5, c6, c7), une indication selon laquelle ledit au moins un identifiant de groupe est associé à un domaine de réseau prédéterminé (105, 109) et une indication supplémentaire selon laquelle lesdites ressources de réseau devraient être l'une de celles incluses dans et l'une de celles exclues d'un trajet de communication ;
Détection de l'indication dudit domaine de réseau (105, 109) dans ledit signal (209) ;
en se basant sur le domaine de réseau (105, 109) détecté, détermination de l'inclusion ou non dudit au moins un identifiant de groupe (10, 20, 30 ; 40, 50) et de ladite indication supplémentaire dans une décision relative à la détermination dudit trajet de communication ; et
Détermination dudit trajet de communication.

11. Procédé selon la revendication 10, comprenant en outre la détermination d'inclure dans ledit ou d'exclure dudit trajet de communication une ressource de réseau associée audit au moins un identifiant de groupe (10, 20, 30 ; 40, 50) si ledit domaine de réseau détecté (105, 109) est le même que celui dudit élément de réseau (E, F, G, R, T).

12. Procédé selon la revendication 11, comprenant en outre l'exclusion de la considération lors de la détermination dudit trajet de communication des ressources de réseau (E, F, G, R, T) dont l'un quelconque des identifiants de groupe est associé à un domaine de réseau détecté (105, 109) dans ledit signal (209) si le domaine détecté est différent de celui dudit élément de réseau (E, F, G, R, T).

13. Procédé selon l'une quelconque des revendications 1 à 3 ou 10 à 12, dans lequel au moins l'une (1) de ladite pluralité de ressources de réseau comprend des sections de trajet de communication (a1, a2, a3) et l'un (2) desdits identifiants de groupe comprend un identifiant de groupe de liaison à risque partagé (SRLG).

14. Procédé selon la revendication 10, comprenant en outre l'identification par un enregistrement (255, 501) d'un identifiant de ressource (A, B, F ; P, Q, Z) d'une ou plusieurs ressources associées audit identifiant de groupe (40, 20, 50 ; LSP100) et la mise en forme d'un signal contenant un identifiant de ressource (A, B, F ; P, Q, Z) d'au moins une ressource identifiée par ledit enregistrement (255, 501).

15. Procédé selon la revendication 14, comprenant en outre l'inclusion dans ledit signal (209) d'une instruction associée audit identifiant de ressource (40, 20, 50 ; LSP100) pour amener un élément de réseau (E, F, G, R, T, D, E, R, S) à prendre une décision en se basant sur ladite instruction et la ressource identifiée dans ledit signal (209).

16. Procédé selon la revendication 14 ou 15, dans lequel chaque ressource comprend une ressource au sein du même domaine (105, 109, 405, 409).

17. Élément de réseau (A) comprenant des moyens de mise en forme de signal pour mettre en forme, en vue de sa transmission sur un réseau (100), un signal d'établissement de trajet (209) pour configurer un trajet de communication entre un premier et un deuxième éléments de réseau (A, Z),
**caractérisé en ce que** lesdits moyens de mise en forme de signal sont adaptés pour inclure dans ledit signal (209) au moins un identifiant de groupe (10, 20, 30 ; 40, 50) utilisé pour identifier une pluralité de ressources de réseau (a1, c2 ; a5, c6, c7) dans un domaine de réseau prédéterminé (105, 109) et entre ledit premier et ledit deuxième éléments de réseau (A, Z), un identifiant de domaine de réseau indiquant que ledit au moins un identifiant de groupe est associé audit domaine de réseau (105, 109) et une indication selon laquelle lesdites ressources de réseau dans ledit domaine ayant ledit au moins un identifiant de groupe devraient être l'une de celles incluses dans et l'une de celles exclues dudit trajet de communication.

18. Élément de réseau (A) selon la revendication 17, dans lequel lesdits moyens de mise en forme de signal sont adaptés pour spécifier dans ledit signal (209) un ou plusieurs identifiants (40, 50) supplémentaires, chaque identifiant supplémentaire étant utilisé pour identifier une ou plusieurs ressources de réseau (a5, c6, c7 ; a6) dans un autre domaine de réseau prédéterminé (109), et pour spécifier dans ledit signal (209) un identifiant pour ledit autre domaine de réseau indiquant que ledit un ou lesdits plusieurs identifiants supplémentaires est/sont associés audit autre domaine de réseau prédéterminé.

19. Élément de réseau (A) selon la revendication 18, dans lequel lesdits moyens de mise en forme de signal sont conçus pour spécifier dans ledit signal (209) une indication selon laquelle ladite une ou lesdites plusieurs ressources de réseau (a5, c6, c7 ; a6) dans ledit autre domaine de réseau (109) ayant un ou plusieurs identifiants devraient être l'une de celles incluses dans et l'une de celles exclues dudit trajet de communication.

20. Élément de réseau (A) selon la revendication 18 ou 19, dans lequel ledit un ou lesdits plusieurs identifiants (40, 50) supplémentaires comprennent chacun un identifiant de groupe (40, 50) pour identifier une pluralité de ressources de réseau (a5, c6, c7 ; a6) dans ledit autre domaine de réseau (109) prédéterminé.

21. Élément de réseau (A) selon la revendication 17, dans lequel ledit identifiant de groupe comprend un identifiant de groupe de ressources (LSP100) utilisé pour identifier un groupe de ressources sur un trajet de réseau préconfiguré.

22. Élément de réseau (A) selon la revendication 21, dans lequel ledit élément de réseau réside dans un domaine de réseau prédéterminé (405) et ledit identifiant de groupe de ressources (LSP100) est associé à une ou plusieurs ressources dans un autre domaine de réseau (409).

23. Élément de réseau (E, F, G, R, T, D, E, R, S) comprenant des moyens de réception (257) pour recevoir un signal d'établissement (209) de trajet de communication contenant au moins un identifiant de groupe (10, 20, 30 ; 40, 50) utilisé pour identifier une pluralité de ressources de réseau (a1, c2 ; a5, c6, c7), une indication selon laquelle ledit au moins un identifiant de groupe est associé à un domaine de réseau prédéterminé (105, 109) et une indication supplémentaire selon laquelle lesdites ressources de réseau devraient être l'une de celles incluses dans et l'une de celles exclues d'un trajet de communication,
moyens de détection (253) pour détecter l'indication dudit domaine de réseau dans ledit signal (209),
premiers moyens de détermination (253) pour déterminer, en se basant sur le domaine de réseau (105, 109) détecté, l'inclusion ou non dudit au moins un identifiant de groupe (10, 20, 30 ; 40, 50) et ladite indication supplémentaire dans une décision relative à la configuration d'un trajet de communication, et
deuxièmes moyens de détermination (253) pour déterminer ledit trajet de communication.

24. Élément de réseau selon la revendication 23, dans lequel lesdits deuxièmes moyens de détermination (253) sont adaptés pour déterminer d'inclure dans ledit ou d'exclure dudit trajet de communication une ressource de réseau associée audit au moins un identifiant de groupe (10, 20, 30 ; 40, 50) si ledit domaine de réseau détecté (105, 109) est le même que celui dudit élément de réseau.

25. Élément de réseau selon l'une quelconque des revendications 17 à 20, 23 ou 24, dans lequel au moins l'une (1) de ladite pluralité de ressources de réseau (a1, c2, a2, c1, a3, c4) comprend des sections de trajet de communication et l'un (2) desdits identifiants de groupe comprend un identifiant de groupe de liaison à risque partagé (SRLG).

26. Élément de réseau selon la revendication 23, comprenant en outre des moyens de stockage (255, 501) contenant un enregistrement dudit identifiant de groupe (40, 20, 50, LSP100) et, associé audit identifiant de groupe, un identifiant de ressource correspondant qui identifie chacune desdites ressources dans ledit groupe,
moyens de comparaison pour comparer l'identifiant de groupe dans ledit signal avec ledit identifiant de groupe dans ledit enregistrement, et
moyens de mise en forme du signal (253, 503) réagissant à un résultat de la comparaison pour mettre en forme un signal en vue de la configuration d'un trajet de communication.

27. Élément de réseau selon la revendication 26, dans lequel lesdits moyens de mise en forme du signal sont adaptés pour inclure dans ledit signal au moins ledit identifiant de groupe (40, 20, 50, LSP100) ou au moins un identifiant de ressource (Q, a3, a4, 40, 50) d'au moins une ressource associée audit identifiant de groupe.
